# EUROPÄISCHE PATENTANMELDUNG

(11) **EP 2 105 733 A1**
(43) Veröffentlichungstag der Anmeldung: **30.09.2009**
(21) Anmeldenummer: 08005559.3
(22) Anmeldetag: 26.03.2008
(51) Int. Cl.: G01N 27/414, G01N 27/12

(54) **Verfahren zum Messen der Konzentration eines Gases**

(71) Anmelder: Micronas GmbH, 79108 Freiburg i. Br. (DE)
(72) Erfinder: Frerichs, Heinz-Peter, Dr., 79271 St. Peter (DE)
(74) Vertreter: Huwer, Andreas

(57) **Zusammenfassung**

Bei einem Verfahren zum Messen der Konzentration eines Zielgases wird ein Gassensor (1) bereit gestellt, dessen Sensorsignal (20) bei konstanter Temperatur von einer Zielgaskonzentration (21) abhängig ist und in einem ersten Aussteuerungsbereich (29) eine geringere Messempfindlichkeit aufweist als in einem zweiten Aussteuerungsbereich (30). Die Lage der Aussteuerungsbereiche (29, 30) ist von der Temperatur abhängig. Die Temperatur des Gassensors (1) wird derart geregelt, dass das Sensorsignal (20) Im Wesentlichen von der Zlelgaskonzentration (21) unabhängig ist und in dem zweiten Aussteuerungsbereich (30) liegt. Die Temperatur des Gassensors (1) ist dann ein Maß für die Zielgaskonzentration (21). (Fig. 5)

## Beschreibung

Die Erfindung betrifft ein Verfahren zum Messen der Konzentration eines Zielgases, wobei ein Gassensor bereit gestellt wird, dessen Sensorsignal von einer Zlelgaskonzentration abhängig ist.

Ein derartiges Verfahren ist aus DE 43 33 875 C2 bekannt. Dabei wird ein Gassensor bereitgestellt, der ein Silizium-Substrat aufweist in das ein Feldeffekltransistor integriert ist. Der Feldeffekttransistor weist eine Gate-Elektrode auf, die leitend mit einer Sensorelektrode verbunden ist über der eine gassensitive Schicht angeordnet Ist, die durch einen Luftspalt von der Sensorelektrode beabstandet und über den Luftspalt kapazitiv an die Sensorelektrode gekoppelt ist. Auf die der Sensorelektrode abgewandte Rückseite der gassensitiven Schicht ist eine Deckelektrode aufgebracht. Ein der Sensorelektrode zugewandter Oberflächenbereich der gassensitiven Schicht wird mit einem Zielgas in Kontakt gebracht, das beim Kontaktierten das Oberflächenbereichs an diesen adsorbiert. Bei einer Änderung der Konzentration des Zielgases verändert sich die Austrittsarbeit in dem Oberflächenbereich der gassensitiven Schicht. Da die Sensorelektrode kapazitiv an den Oberflächenbereich gekoppelt ist, verändert sich dabei auch das elektrische Potential an der Gate-Elektrode. In Abhängigkeit von der Potentialänderung wird der Stromfluss zwischen einem Drain- und einem Source-Anschluss des Feideffekttransistors gesteuert. Bei einem derartigen Gassensor ist das Messsignal etwa logarithmisch zur Zielgaskonzentration, d.h. die Messempfindlichkeit nimmt mit zunehmender Zielgaskonzentration ab. Da das Messsignal außerdem durch die Anwesenheit von Sauerstoff gestört werden kann, Ist die Messung größerer Zlelgaskonzentration mit dem Verfahren problematisch.

Es besteht deshalb die Aufgabe, ein Verfahren zum Messen der Konzentration eines Zielgases bereitzustellen, das eine hohe Messgenauigkeit ermöglicht.

Diese Aufgabe wird dadurch gelöst, dass ein Gassensor bereit gestellt wird, dessen Sensorsignal bei konstanter Temperatur von der Zietgaskonzentration abhängig ist und in einem ersten Aussteuerungsbereich eine geringere Messempflndlichkeit aufweist als in einem zweiten Aussteuerungsbereich, dass die den Aussteuerungsbereichen zugeordneten Gaskonzentrationen von der Temperatur abhängig sind, und dass die Temperatur des Gassensors derart geregelt wird, dass das Sensorsignal im Wesentlichen von der Zielgaskonzentration unabhängig ist und in dem zweiten Aussteuerungsbereich liegt, und dass die Temperatur des Gassensors ein Maß für die Zielgaskonzentration ist.

In vorteilhafter Weise wird also der Arbeitspunkt des Gassensors bei unterschiedlichen Zielgaskonzentrationen jeweils in den Aussteuerungsbereich mit der größeren Messempfindlichkeit gelegt, wodurch unterschiedliche Zielgaskonzentrationen mit derselben Messempfindfichlseit gemessen werden können. Die Regelung der Temperatur erfolgt dabei so, dass das Sensorsignal des Gassensors bei einer Veränderung der Zielgoskonzentration in etwa seinen Wert beibehält, sodass die Zielgaskonzentration dann aus der eingestellten Temperatur ermittelt werden kann. Die Aussteuerungsbereiche können zuvor experimentell gemessen und/oder mit Hilfe eines mathematischen Modells bestimmt werden.

Bei einer bevorzugten Ausgestaltung der Erfindung wird die Temperatur derart geregelt, dass der Gassensor an einem Arbeitspunkt betrieben wird, an dem der Gassensor seine größte Empfindlichkeit für das Zielgas aufweist. Die Zielgaskonzentration kann dann noch genauer gemessen werden.

Vorteilhaft ist, wenn die Regelung der Temperatur des Gassensors nur dann vorgenommen wird, wenn die ermittelte Temperatur in einem vorbestimmten Temperaturbereich liegt, und wenn die Konzentration des Zielgases außerhalb dieses Temperaturbereichs in Abhängigkeit von dem Sensorsignal des Gassensors und' Kenngrößen bestimmt wird. In einem Zielgas-Konzentratlonsbereich, In dem der Gassensor auch ohne die Temperaturregelung eine ausreichende Messgenauigkeit aufweist und/oder in dem eine Temperierung des Gassensors zu aufwändig ist, kann die Temperaturregelung also deaktiviert werden. Dadurch kann das Verfahren einfacher und mit geringerem Energieaufwand durchgeführt werden.

Bei einer bevorzugten Ausführungsform der Erfindung wird die Temperatur außerhalb des für die Temperaturregelung vorgesehenen Temperaturbereichs auf einen konstanten Temperaturwert eingestellt. Dadurch können bei deaktivierter Temperaturregelung Messungenauigkeiten, die durch Schwankungen der Umgebungstemperatur bedingt sind, vermieden werden.

Vorteilhaft Ist, wenn der für die Temperaturregelung vorgesehene Temperaturbereich oberhalb von 60 °C, insbesondere von 70 °C und gegebenenfalls von 80 °C liegt. Der Gassensor kann dann durch Beheizen auf einfache Weise temperiert werden.

Zweckmäßigerweise wird das Sensorsignal durch Messen der Austrittsarbeit einer gassensitiven Schicht erfasst. Die gassensitive Schicht ist dabei bevorzugt mit einer für das Zielgas inerten, elektrisch isolierenden Beschichtung überdeckt, die haftend mit der gassensitiven Schicht verbunden und derart ausgestaltet ist, dass sie für das Zielgas, dessen Konzentration gemessen werden soll, und ein sich davon unterscheidendes, an dem Oberflächenbereich adsorbierbares weiteres Gas durchlässig ist. Die Beschichtung kann für das Zielgas und das weitere Gas unterschiedliche Diffusionskonstanten aufweisen, wobei die Diffusionskonstanten, das Zielgas und das weiter Gas derart aufeinander gewählt werden, dass die Sensitivität des Gassensors für das Zielgas zunimmt, wenn die Konzentration des Zielgases bei Anwesenheit des weiteren Gases einen vorbestimmten Konzentrations-Schwellenwert überschreitet.

Das Sensorsignal wird bevorzugt kapazitiv durch einen Luftspalt hindurch an der gassensitiven Schicht gemessen. Bei dem erfindungsgemäßen Verfahren kann das Sensorsignal aber auch durch Messen des elektrischen Widerstands der gassensitiven Schicht erfasst werden. Dabei kann die gassensitive Schicht eine Metalloxidschicht sein, die bei Gasexposition ihren Widerstand ändert.

Nachfolgend sind Ausführungsbeispiele der Erfindung anhand der Zeichnung näher erläutert. Es zeigt
- Fig. 1: einen Querschnitt durch einen Gassensor, der einen SGFET aufweist, dessen Kanalbereich über einen Luftspalt kapazitlv an eine mit einer Passivlerungs-Beschlchtung versehene gassensitive Schicht gekoppelt ist,
- Fig.2: einen Querschnitt durch einen Gassensor, der einen CCFET aufweist, dessen Sensorelektrode über einen Luftspalt kapazitiv an eine mit einer Passivierungs-Beschichtung versehene gassensitive Schicht gekoppelt ist,
- Fig. 3: einen Querschnitt durch einen als Kelvinsonde ausgestalteten Gassensor, bei dem die gassensitive Schicht eine Passivierungs-Beschichtung aufweist,
- Fig. 4: eine graphische Darstellung eines Sensorssignals (obere Kurve) und der Zielgoskonzentration (untere Kurve) eines Ausführungsbeispiels des Gassensors, wobei auf der Abszisse die Zeit t und auf der Ordinate links die Amplitude S des Sensorssignals eines Potentialsensors und rechts die Zielgaskonzentration k aufgetragen sind,
- Fig. 5: eine Darstellung ähnlich Fig. 4, wobei Jedoch die Temperatur des Gassensors geringer ist als in Fig. 4,
- Fig. 6: eine Darstellung ähnlich Fig. 5, wobei Jedoch die Temperatur des Gassensors geringer ist als in Fig. 5,
- Fig. 7: eine graphische Darstellung eines Schwellenwerts für die Zielgaskonzentration des Gassensors, wobei auf der Abszisse die Temperatur und auf der Ordinate der Schwellenwert aufgetragen sind, und
- Fig. 8: eine schematische Darstellung einer Regeleinrichtung.

Bei einem Verfahren zum Messen der Konzentration eines Zielgases wird ein Gassensor 1 bereitgestellt, der als SGFET, als CCFET oder als Kelvinsonde ausgestaltetet ist.

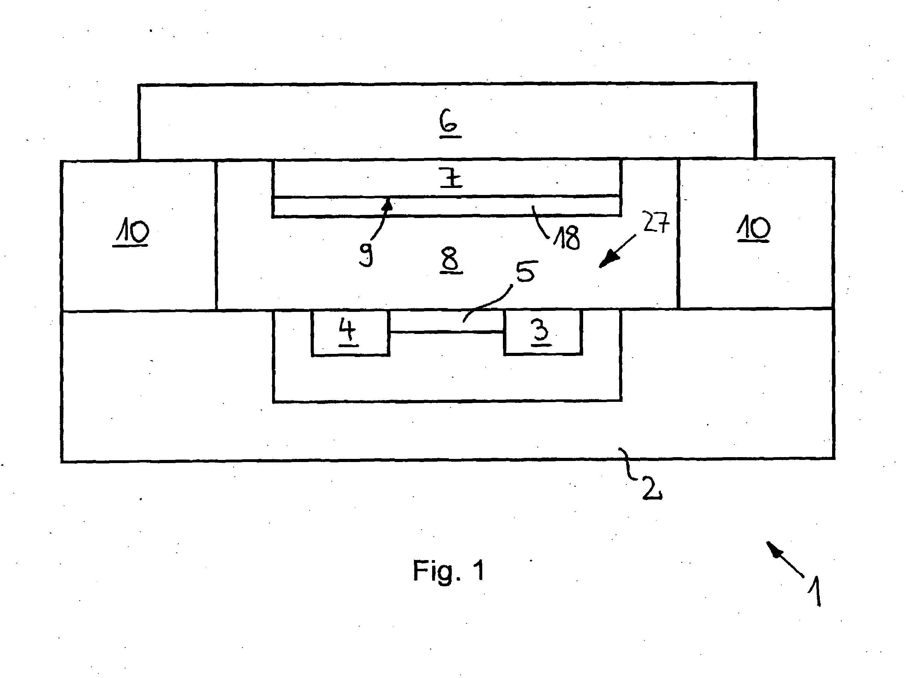

Wie in Fig. 1 erkennbar ist, weist der als SGFET ausgestaltete Gassensor ein Substrat 2 auf, in das ein Potentialsensor 27 integriert ist. Der Potentialsensor 27 hat eine Drain 3 und eine Source 4, die in einer n-dotierten Transistorwanne angeordnet sind. Die Drain 3 und die Source 4 können beispielsweise aus p-dotiertem Silizium bestehen. Die Drain 3 ist über elektrische Leiterbahnen mit einem in der Zeichnung nicht näher dargestellten Drain-Anschluss verbunden. In entsprechender Weise ist die Source 4 mit einem Source-Anschluss verbunden. Zwischen Drain 3 und Source 4 ist in dem Substrat 2 ein Kanalbereich 5 gebildet, auf dem eine elektrisch isolierende Dünnoxidschicht angeordnet ist, die als Gatedielektrikum dient.

Über dem Kanalbereich 5 ist an einem Trägerteil 6 eine gassensitive Schicht 7 angeordnet, die vorzugsweise aus einem Edelmetall, insbesondere aus Platin oder Palladium besteht und durch einen Luftspalt 8 von dem Kanalbereich 5 beabstandet ist. Ein dem Kanalbereich 5 zugewandter Oberflächenbereich 9 der gassensitiven Schicht 7 ist über den Luftspalt 8 kapazitiv an den Kanalbereich 5 gekoppelt.

Das Trägerteil 6 ist beidseits der gassensitiven Schicht 7 über eine elektrische Isolationsschicht 10 mit dem Substrat 2 verbunden. In Fig. 1 ist deutlich erkennbar, dass das Trägerteil 6 und die gassensitive Schicht 7 ein Suspended Gate bilden.

Der Luftspalt 4 wird über mindestens eine In der Zeichnung nicht näher dargestellte Öffnung mit der den Gassensor 1 umgebenden Atmosphäre verbunden. Über diese Öffnung wird der Oberflächenbereich 9 der gassensitiven Schicht 7 mit einem zu detektierenden Zielgas, nämlich Wasserstoff, und mit einem weiteren Gas, nämlich einem elektronegativen Gas, wie z.B. in der Atmosphäre enthaltendem Sauerstoff, in Kontakt gebracht. Bei einem Kontakt mit dem Oberflächenbereich 9 adsorbieren das Zielgas und das weitere Gas an dem Oberflächenbereich 9. Bei der Adsorption des Zielgases verändert sich in dem Oberflächenbereich 9 die Austrittsarbeit, was zu einer Veränderung des elektrischen Potentials in dem Kanalbereich 5 führt

Bei dem Ausführungsbeispiel nach Fig. 1 ist der Kanalbereich 5 offen ausgebildet (ISFET) und über das Dünnschichtoxid und den Luftspalt 8 direkt an die gassensitive Schicht 7 kapazitiv gekoppelt. Deutlich ist erkennbar, dass der Kanalbereich 5 an der der gassensitiven Schicht 7 gegenüberliegenden Seite des Luftspalts 8 angeordnet ist.

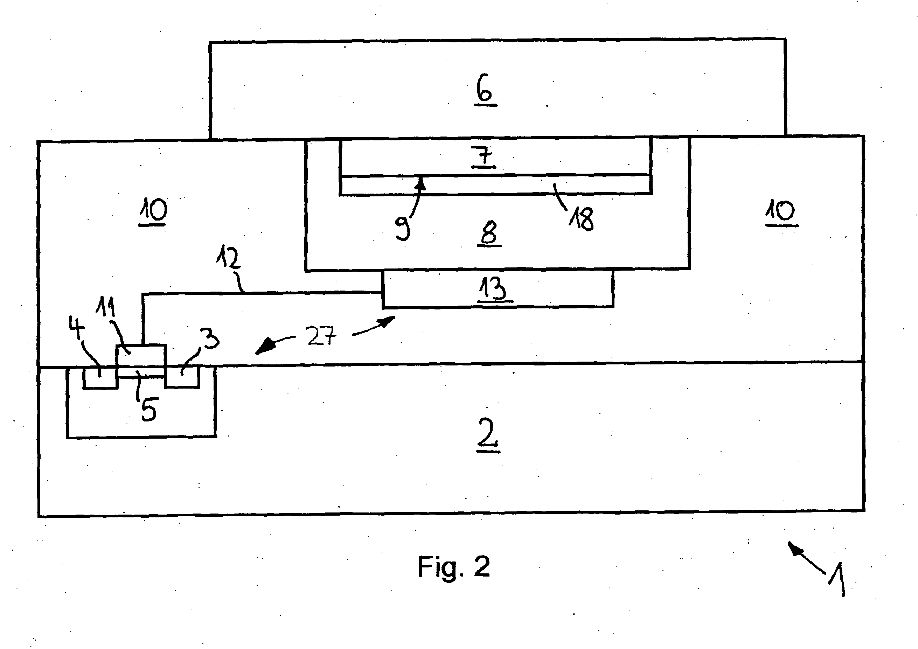

Bei dem Ausführungsbeispiel nach Fig. 2 ist der Feldeffekttransistor als CCFET ausgestaltet, bei dem der Kanalbereich 5 seitlich neben der gassensitiven Schicht 7 in dem Substrat 2 angeordnet und mit einer Gateelektrode 11 abgedeckt ist. Zur kapazitiven Ankopplung des Kanalbereichs 5 an die gassensitive Schicht 7 ist die Gateelektrode 11 über eine elektrische Verbindungsleitung 1 2 mit einer Sensorelektrode 13 verbunden, die an der dem Oberflächenbereich 9 der gassensitiven Schicht 7 gegenüberliegenden Seite des Luftspalts 8 auf einer auf dem Substrat 2 befindlichen Isolationsschicht 10 angeordnet ist. Die Isolationsschicht 10 kann beispielsweise eine SiO₂-Schicht sein. Der Aufbau des Suspended Gates des SGFET entspricht dem in Fig. 1.

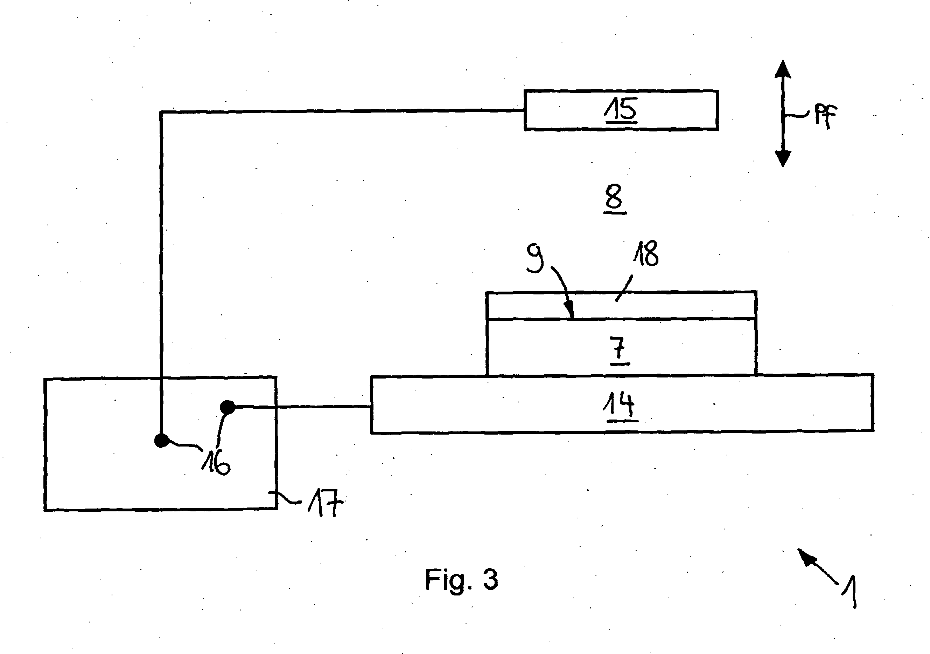

Bei dem in Fig. 3 gezeigten Ausführungsbeispiel ist der Gassensor 1 als KelvinSonde ausgestaltet. Die gassensitive Schicht 7 ist auf einem elektrisch leitenden Träger 14 angeordnet und weist an ihrer dem Träger 14 abgewandten Seite einen Oberflächenbereich 9 auf, an den das Zielgas adsorbieren kann. Der Oberflächenbereich 9 ist durch einen Luftspalt 8 von einer Elektrode 15 beabstandet und bildet mit dieser eine elektrische Kapazität.

Die Elektrode 15 kann mit Hilfe eines in der Zeichnung nicht näher dargestellten Aktors in Schwingungen versetzt werden. Dabei bewegt sich die Elektrode 15 entsprechend dem Pfell Pf abwechselnd auf die gassensitive Schicht 7 zu- und von dieser weg. Die Elektrode 15 und der Träger 14 bzw. die gassensitive Schicht 7 sind mit Anschlüssen 16 einer Auswerte- und Ansteuereinrichtung 17 verbunden. Diese hat einen in Fig. 3 nicht näher dargestellten Potentialsensor, der zur Messung der elektrischen Spannung zwischen der gassensitiven Schicht 7 und der Elektrode 15 mit den Anschlüssen 16 verbunden ist. Die Auswerte- und Ansteuereinrichtung 17 weist außerdem eine mit dem Potentialsensor in Steuerverbindung stehende, verstellbare Spannungsquelle auf, mittels der eine Gegenspannung zwischen den Potentialsensor und die Elektrode 15 und/oder den Träger 15 anlegt wird. Die Gegenspannung wird so gewählt, dass das von dem Potentialsensor gemessene Potential im Mittel gleich null ist.

Bei den vorstehend beschriebenen Gassensoren 1 ist jeweils der Oberflächenbereich 9 der gassensitiven Schichten 7 durchgängig von einer für das Zielgas inerten, elektrisch isolierenden polymeren Beschichtung 18 überdeckt, die vorzugsweise aus Polymethylmethacrylat (PMMA) oder Polyimid besteht. Die Beschichtung 18 haftet fest an der gassensitiven Schicht 7 an. Die Beschichtung 18 ist als Dickschicht mit einer etwa konstanten Dicke ausgestaltet, die vorzugsweise zwischen 0,5 µm und 2,5 µm beträgt

Die Beschichtung 18 ist sowohl für das Zielgas als auch für das weitere Gas durchlässig. Die Diffusionskonstanten, das Zielgas und das weitere Gas sind derart aufeinander abgestimmt, dass die Sensitivität des Gassensors 1 für das Zielgas stark zunimmt, wenn die Konzentration des Zielgases bei Anwesenheit des weiteren Gases einen Schwellenwert 19 überschreitet. Die Lage des Schwellenwerts 19 ist von der Temperatur abhängig.

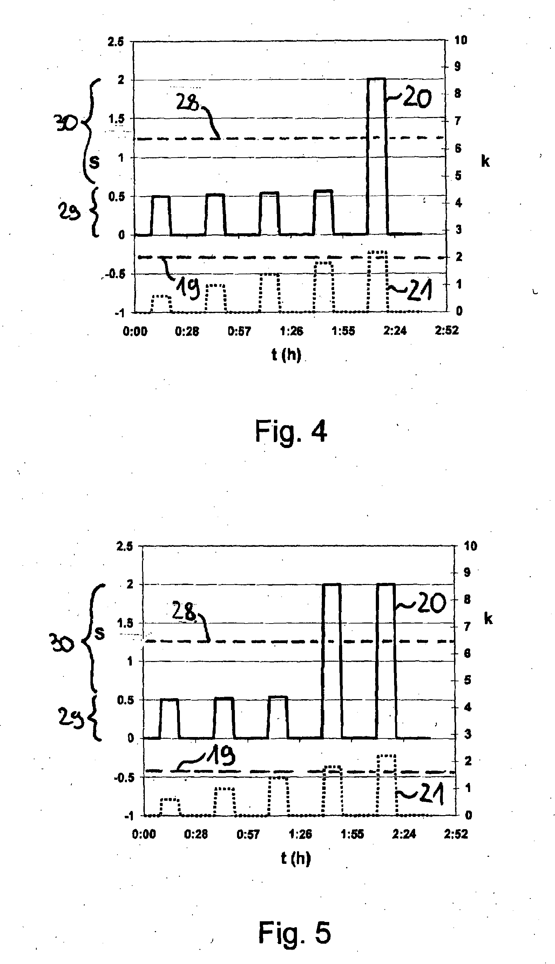

In Fig. 4 bis 6 ist erkennbar, dass das Sensorsignal 20 des Potentialsensors 27 jeweils bei konstanter Temperatur bei Zielgaskonzentrationen 21, die in einem ersten Konzentrationsbereich liegen, der nach oben durch den Konzentrations-Schwellenwert 19 begrenzt ist, zunächst etwa logarithmisch mit der Zielgaskonzentration 21 ansteigt. In dem ersten Konzentrationsbereich liegt das Sensorsignal 20 des Potentialsensors 27 in einem ersten Aussteuerungsbereich 29.

In einem zweiten Konzentrationsbereich, der an seinem unteren Ende an den Konzentrations-Schwellenwert angrenzt und wesentlich schmaler ist als der erste Konzentrationsbereich, steigt das Sensorsignal 20 bei konstanter Temperatur stark an. In dem zweiten Konzentrationsbereich liegt das Sensorsignal 20 in einem zweiten Aussteuerungsbereich 30, in dem die Messempfindllchkeit des Gassensors 1 größer ist als in dem ersten Aussteuerungsbereich 29. In einem dritten Konzentrationsbereich, der oberhalb des zweiten Konzentrationsbereichs liegt und an diesen angrenzt, ist das Sensorsignal 20 des Potentialsensors 27 bei konstanter Temperatur im Wesentlichen konstant auf einem Wert, der an den zweiten Konzentrationsbereich angrenzt.

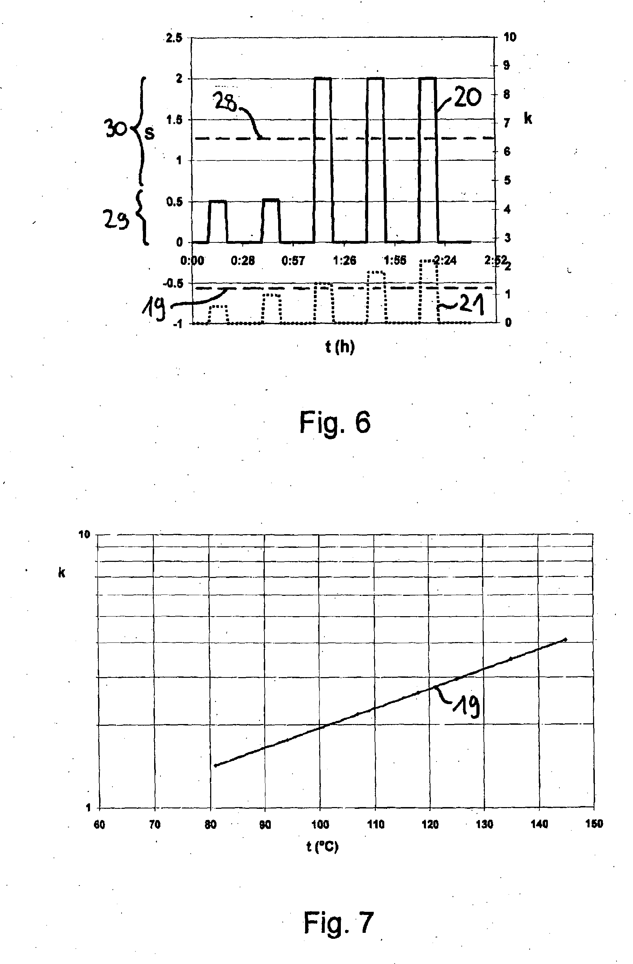

In Fig. 7 ist erkennbar, dass der Konzentrations-Schwellenwert 19 von der Temperatur der aus der gassensitiven Schicht 7 und der Beschichtung 18 gebildeten Schichtenfolge abhängig ist und mit zunehmender Temperatur kontinuierlich ansteigt. Dabei erfolgt der Anstieg etwa exponentiell mit der Temperatur. Gegebenenfalls kann der exponentielle Anstieg in dem für die Konzentrationsmessung relevanten Bereich linear angenähert werden.

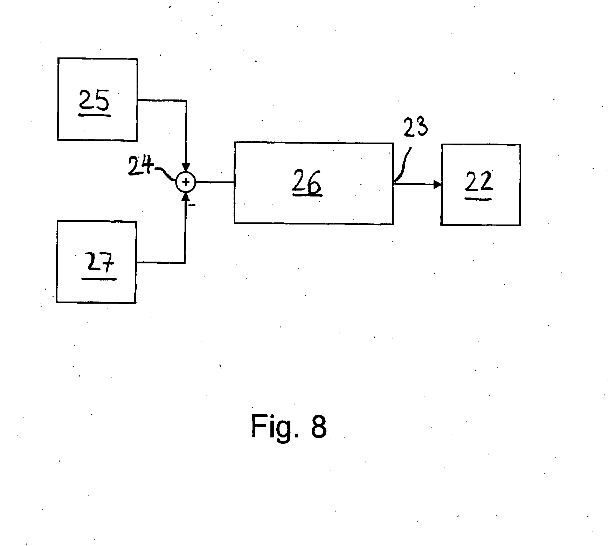

Die in Fig. 1-3 abgebildeten Gassensoren weisen jeweils eine in Fig. 8 nur schematisch dargestellte Temperierelnrichtung 22 auf, mittels der die Temperatur der gassensitiven Schicht 7 und der Beschichtung 18 einstellbar ist. Ein Steuereingang der Temperiereinrichtung 22 ist mit einem Stellsignalausgang 23 einer Regeleinrichtung verbunden, die dazu dient, die Temperatur des der gassensitiven Schicht 7 und der Beschichtung 18 jeweils so einzustellen, dass das Sensorsignal 20 des Potentialsensors 27 im Wesentlichen von der Zielgaskonzentration 21 unabhängig ist und in dem zweiten Aussteuerungsbereich 30 liegt.

Die Regeleinrichtung hat eine Vergleichseinrichtung 24, die einen mit dem Potentialsensor 27 verbunden Istwerteingang und einen mit einem Sollwertgeber 25 verbundenen Sollwerteingang aufweist. Ein Ausgang der Verglelchseinrichtung 24 ist über einen Regler 26 mit dem Stellslgnalausgang 23 verbunden. Mit Hilfe des Sollwertgebers 25 wird ein Sollwert 28 an den Sollwerteingang angelegt, der im zweiten Aussteuerungsbereich 30 liegt, also einem Wert entspricht, den das Sensorsignal 20 des Potentialsensors 27 bei einer Zielgaskonzentration 21 oberhalb des Konzentrations-Schwellenwerts 19 aufweist.

In einer ersten Betriebsart des Gassensors 1 steuert der Regler 26 die Temperlereinrichtung 22 jeweils derart an, dass beim Auftreten einer Abweichung zwischen dem Sensorsignal 20 des Potentialsensors 27 und dem Sollwert 28 die Temperatur der gassensitiven Schicht 7 und der Beschichtung 18 im Sinne einer Reduzierung der Abweichung verändert wird. Wenn das Sensorsignal 20 des Potentialsensors 27 mit dem Sollwert 28 übereinstimmt, ist die Temperatur der gassensitiven Schicht 7 und der Beschichtung 18 ein Maß für die Zielgaskonzentration 21.

In einer zweiten Betriebsart wird mit Hilfe der Tempehereinrichtung 22 die Temperatur der gassensitiven Schicht 7 und der Beschichtung 18 auf einen konstanten Wert eingestellt. Alternativ kann die Temperlereinrichtung 22 in der zweiten Betriebsart auch abgeschaltet sein, so dass die Temperatur des Gassensors 1 dann etwa der Umgebungstemperatur entspricht. Die zweite Betriebsart ist immer dann aktiviert, wenn die von dem Regler 26 ermittelte Temperatur einen vorgegebenen Temperatur-Mindestwert unterschreitet. Dieser kann beispielsweise etwa 60 - 80 °C betragen.

In der zweiten Betriebsart wird die Zleigaskonzentration 21 in Abhängigkeit vom Signalwert des Sensorsignals 20 des Potentialsensors 27 und in Abhängigkeit von Kenngrößen ermittelt, die zum Beispiel in Form einer Kennlinie vorliegen können. In dem zweiten Betriebszustand entspricht die Signalauswertung im Wesentlichen der eines herkömmlichen Gassensors. Sobald der Temperatur-Mindestwert überschritten wird, wird auf die erste Betriebsart umgeschaltet, um die Zielgaskonzentration 21 in Abhängigkeit von der eingestellten Temperatur zu bestimmen. Die erste Betriebsart kommt also bei hohen Zielgaskonzentrationen 21 und die zweite Betriebsart bei geringeren Zielgaskonzentrationen 21 zur Anwendung.

Die erste Betriebsart wird vorzugsweise gewählt, wenn die Konzentration des Zielgases zwischen 1% und 4% beträgt. Der entsprechende Konzentrationsbereich kann experimentell ermittelt werden. in diesem Bereich ergibt sich ein annähernd exponentieller Zusammenhang zwischen der Temperatur und der Zielgaskonzentration 21. Der erfindungsgemäße Gassensor 1 ermöglicht dadurch in diesem Konzentrationsbereich im Vergleich zu einem herkömmlichen Gassensor eine deutlich verbesserte Auflösung.

## Patentansprüche

1. Verfahren zum Messen der Konzentration eines Zielgases, wobei ein Gassensor (1) bereit gestellt wird, dessen Sensorsignal (20) bei konstanter Temperatur von einer Zielgaskonzentration (21) abhängig ist und in einem ersten Aussteuerungsbereich (29) eine geringere Messempfindlichkeit aufweist als in einem zweiten Aussteuerungsbereich (30), wobei die den Aussteuerungsbereichen (29, 30) zugeordneten Gaskonzentrationen von der Temperatur abhängig sind, und wobei die Temperatur des Gassensors (1) derart geregelt wird, dass das Sensorsignal (20) im Wesentlichen von der Zieigasisonzentration (21) unabhängig ist und in dem zweiten Aussteuerungsbereich (30) liegt, und wobei die Temperatur des Gassensors (1) ein Maß für die Zielgaskonzentration (21) ist.

2. Verfahren nach Anspruch 1, wobei die Temperatur derart geregelt wird, dass der Gassensor (1) an einem Arbeitspunkt betrieben wird, an dem der Gassensor (1) seine größte Empfindlichkeit für das Zielgas aufweist.

3. Verfahren nach Anspruch 1 oder 2, wobei die Regelung der Temperatur des Gassensors (1) nur dann vorgenommen wird, wenn die ermittelte Temperatur in einem vorbestimmten Temperaturbereich liegt, und wobei die Konzentration des Zielgases außerhalb dieses Temperaturbereichs in Abhängigkeit von dem Sensorsignal (20) des Gassensors (1) und Kenngrößen bestimmt wird.

4. Verfahren nach einem der Ansprüche 1 bis 3, wobei die Temperatur außerhalb des für die Temperaturregelung vorgesehenen Temperaturbereichs auf einen konstanten Temperaturwert eingestellt wird.

5. Verfahren nach einem der Ansprüche 1 bis 4, wobei der für die Temperaturregelung vorgesehene Temperaturbereich oberhalb von 60 °C, insbesondere von 70 °C und gegebenenfalls von 80 °C liegt.

6. Verfahren nach einem der Ansprüche 1 bis 5, wobei das Sensorsignal (20) durch Messen der Austrittsarbeit einer gassensitiven Schicht (7) erfasst wird.

7. Verfahren nach einem der Ansprüche 1 bis 6, wobei das Sensorsignal (20) kapazitiv durch einen Luftspalt (8) hindurch an der gassensitiven Schicht (7) gemessen wird.

8. Verfahren nach einem der Ansprüche 1 bis 7, wobei das Sensorsignal (20) durch Messen des elektrischen Widerstands der gassensitiven Schicht (7) erfasst wird.
